# EUROPEAN PATENT SPECIFICATION

(11) **EP 2 418 928 B1**
(45) Date of publication and mention of the grant of the patent: **30.03.2016**
(21) Application number: 10713461.1
(22) Date of filing: 13.04.2010
(51) Int. Cl.: A01B 39/18

(54) **WEEDER WITH ROTATING MEMBERS HAVING HOOK-LIKE ELEMENTS.**
UNKRAUTJÄTER MIT ROTIERENDEN WERKZEUGEN MIT HAKENÄHNLICHEN ELEMENTEN
EXTIRPATEUR MUNI D'ORGANES ROTATIFS POSSÉDANT DES ÉLÉMENTS EN FORME DE CROCHETS

(30) Priority: 15.04.2009 IT MI20090609
(43) Date of publication of application: 22.02.2012
(73) Proprietor: Oliver Di Signorini Luciano, 37056 Engazzà di Salizzole (VR) (IT)
(72) Inventor: SIGNORINI, Luciano, I-37056 Engazzà di Salizzole (VR) (IT)
(74) Representative: Mittler, Enrico
(86) International application number: PCT/EP2010/054845
(87) International publication number: WO 2010/119040

(56) References cited:
- AU-B2- 445 984
- DE-C- 138 516
- FR-A- 1 268 347
- NL-A- 7 315 274
- US-A- 2 215 364
- US-A- 4 570 721

## Description

The present invention relates to a weeder with rotating members having hook-like elements.

Some types of weeders having idle rotating members have already been suggested, each consisting of a group of flat or concave discs having a toothed edge, or of stars having curved and helical blades, mounted quite close to one another on the same pin arranged obliquely with respect to the work direction.

These tools, which are not very widespread, are generally not very effective in cultivations with weeds and often require the presence of a second operator to control the working members.

Other types of weeders having rotating members are the so-called finger weeders in which the idle rotating members consist of small plates, mounted in an inclined V shape, which carry hard rubber or plastic material fingers in a radial position on the edge. A first disadvantage of this latter type of weeder is that of having poorer hourly performance than those of other types of weeders, e.g. rotary weeders, due to the reduced treatment width and the low feeding speed. Moreover, this latter type of weeder has the disadvantage of using members made of plastic or rubber material and therefore subject to wear and breaking and also, while having a certain effectiveness in removing weeds, it is not indicated for all types of cultivations, and in particular for less robust cultivations which may be damaged. Lastly, this type of weeder machines requires a careful adjustment of the position of the small plates which may not always be easy and effortless to do.

FR1268347, NL7315274, DE138516 and AU445984B disclose rotating weeder members with a plurality of hook-like elements.

It is the main object of the present invention to provide a rotating weeder member and a weeder mounting said member capable of suppressing or substantially reducing the afore-lamented drawbacks.

In accordance with the invention, such an object is achieved by a rotating weeder member for a weeder machine as disclosed in claim 1.

These and other features of the present invention will become more apparent from the following detailed description of a practical embodiment thereof illustrated by way of non-limiting example in the accompanying drawings, in which:

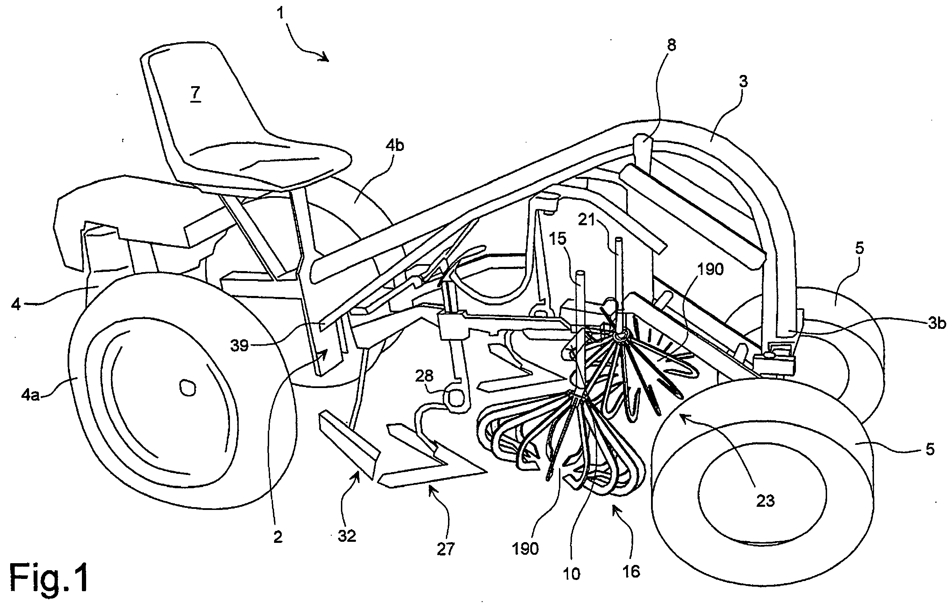

Figure 1 shows a perspective view of a weeder having rotating members according to the present invention;
Figure 2 shows a front view of rotating weeder means according to the present invention; and
Figure 3 shows a side view of the rotating weeder means.

Equal or similar parts or components in the accompanying drawings have been marked with the same reference numbers.

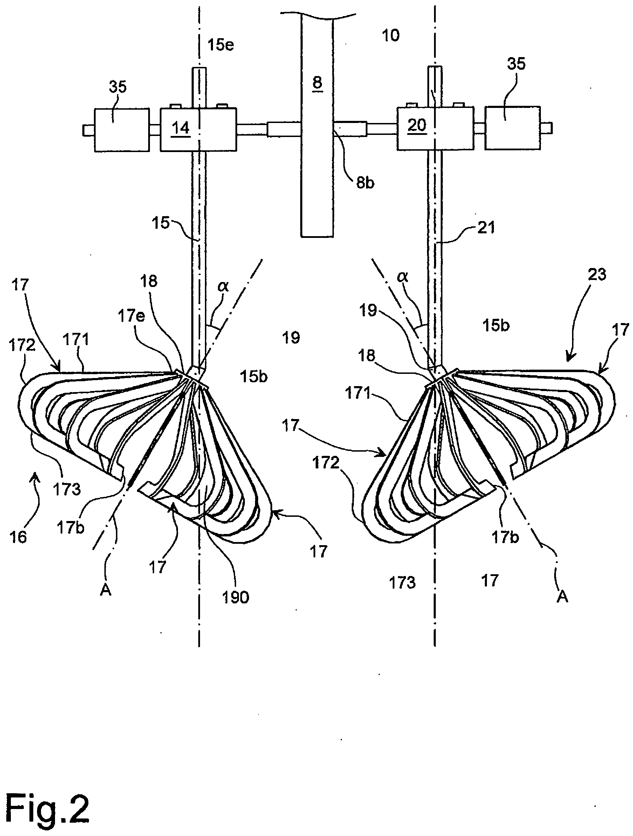

With reference to the afore-listed figures, a weeder machine or simply a weeder 1 will be seen, being equipped with a frame 2 having a main longitudinal member 3 at one extremity 3a of which there are the traction means 4 coupled to two drive wheels 4a and 4b, and at the other extremity 3b of the main longitudinal member 3 there are two other idle wheels 5 steerable by means of known control means (not shown) intended to allow an operator seated on a seat 7 to drive said weeder 1. The main longitudinal member 3 preferably consists of a tube and rigidly supports a vertical upright 8 which has (figure 2) a lower extremity 8b at which a horizontal tool-holder bar 10 is rigidly mounted and placed transversally with respect to said upright 8.

At least one couple of fixing means 14 and 20 is provided on the tool-holder bar 10, one on one side and one on the other side with respect to the upright 8, positionable as needed at a distance to the extremity 8b of the upright 8, each intended to keep a circular-section bar 15, 21 in a substantially vertical position: an upper extremity thereof will be fixed to said fixing means 14, 20 while a lower inclined extremity 15b is intended to support rotating weeder members 16, 23.

According to the present invention, the rotating weeder members or means 16, 23 each consist of a plurality of hook-like elements 17 arranged in a circle around the rotation axis A of the member itself and at the same distance from said axis A. Each element 17 has an extremity 17a rigidly connected with a connecting element 18, a ring in the embodiment, which may be rotatably coupled to said bars 15, 21, and another free extremity 17b. Each coupling point to the ring 18 of each element 17 is substantially equally spaced from the coupling point of the adjacent element 17; as a consequence, the elements 17 are thus radially arranged and are equally spaced to one another with respect to said rotation axis A to substantially form a discreet rotoidal discontinual open structure, i.e. there is an open space 50 for the passage of the lifted soil between two elements 17.

A rotoidal element with a threaded pin may be provided as a connecting means in place of the ring 18, to be secured to an element rotatably coupled to the bar 15, 21.

Each hook-like element 17 consists of a rolled section, preferably made of metal, and includes a first rectilinear section 171 from the extremity 17a, joined by means of a curvilinear section 172, to a second rectilinear section 173 ending with said free extremity 17b converging inwards with respect to the rotation axis A. The angle formed by the two rectilinear sections of one element of the plurality 17 is acute and, preferably, all the rectilinear sections ending at the extremities 17b will lay on the same plane.

There are fifteen elements 17 in the present non-limiting embodiment.

Said ring 18 is fixed at the extremity 15b of the bar 15 by means of joining means 19 which allow the ring 18, preferably equipped with a bearing, to freely rotate the plurality of elements 17 about rotation axes A inclined by an angle α with respect to the vertical axis of the bars 15, 21; the joining means 19, as well as the extremity 15b of the bars 15, 21, is inclined by said angle α with respect to the vertical bars 15 ,21. Said angle α is less than a right angle and may be in the range from 30° to 45°, for example.

As apparent from the figure, the rotating members 16, 23 are inclined by the same angle α with respect to the vertical bars 15, 21 but in the opposite direction so as to be converging towards the centre to facilitate the disposal of the treated soil outward.

It will be noted that the two bars 15 and 21 are substantially parallel. The distance between the fixing means 14 and 20 and therefore the distance between the two bars 15 and 21, is adjustable as well as the distance between the rotating weeder members 16 and 23 placed at the extremities 15b of the bars 15 and 21.

Each weeder member 16, 23 has hook-like elements 17 arranged to form an open internal cavity (190) and a sequence of outward convex portions (172) of said elements (17) adapted to sequentially interact with the soil to be worked.

Further fixing means 35 placed next to and very close to the fixing means 14, 20 are provided on the tool-holder bar 10, but at a greater distance than that between the upright 8 and the fixing means 14, 20.

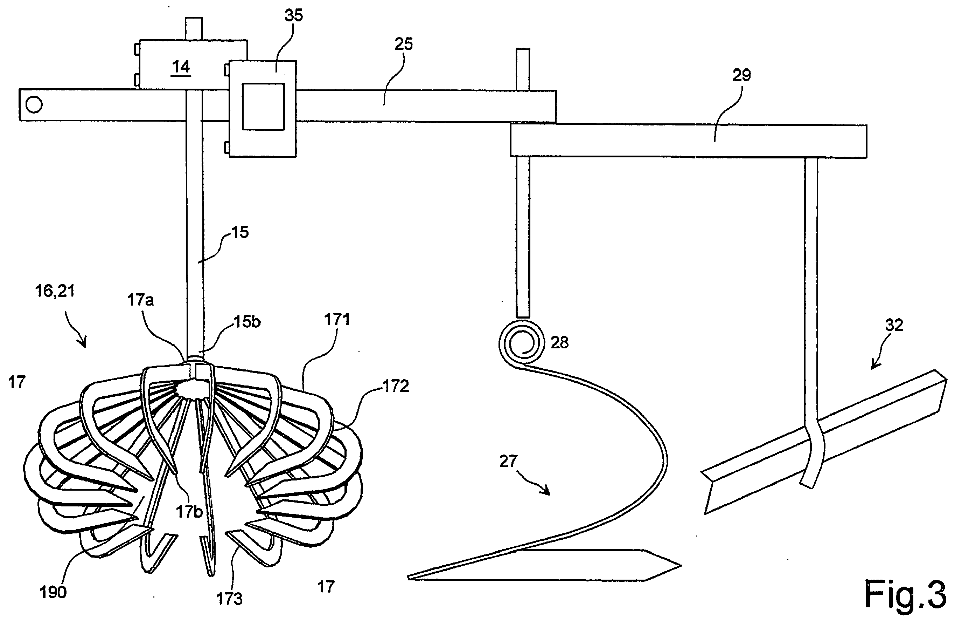

With reference to figure 3, it will be noted that the fixing means 35 rigidly support horizontal arms 25 intended to support fixed weeder means 26.

Said fixed weeder means 26 may consist of a triangular shovel 27 having two cutting edges. An elastic joining element 28 may be advantageously provided in a middle position of said fixed weeder means 26, which makes the shovel 27 flexible so as to optimally interact with different soils.

A further horizontal arm 29 downstream from the shovel 27 rigidly supports earthing up means 32 preferably knife-like.

Before being used, the weeder 1 particularly suitable for the so-called "row" cultivations, equipped as described above, requires some preliminary adjustments: the distance between the two bars 15 and 21 should be conveniently set so as to near the rotating weeder means 16 and 23 to the cultivation as much as possible, while avoiding that the same is damaged; the weeder depth should be set by adjusting the height of the rotating weeder means 16 and 23 from the ground; and finally the positions of the fixed weeder means 26 and earthing up means 32 should be set. The due adjustments being made, the operator driving the weeder 1 will position the weeder 1 so that the row cultivation to be treated for weeds is kept equally apart from the rotating weeder means 16 and 23, and the weeder being then started up, its feeding rotates the idle rotating weeder means 16 and 23 which, by penetrating the soil, will contribute to removing the weeds, by breaking the superficial crust of the soil, turning it up and quickly discharging it from within the rotating weeder means 16 and 23. The fixed weeder means 26 advantageously cut the weeds at a certain depth, in particular the larger ones, which were not already removed by the rotating weeder means 16 and 23, and the earthing up means 32 then near the soil to the cultivation which is thus earthed up with well-aired soil.

In practice, any materials and dimensions may be used, depending on the needs.

The plurality of consecutive hook-like elements 17 as previously described advantageously permits to turn up the ground more effectively, because the curved portion 172 of the members 16, 23 which interacts with the soil is rounded with outward convexity; the rotoidal conformation of the weeder member 16, 23 substantially automates performing a plurality of small excavations manually executable by means of a common shovel.

Moreover, the open internal cavity 190 of the members 16, 23 produced by the aforesaid arrangement of the elements 17 allows improved treatment of the soil, i.e. improved cutting up and removing of the large clumps from the zone processed.

The quality of the work of said fixed weeder elements 26, 32 is also increased due to the interaction with optimally treated soil and less residual weeds to be removed.

Finally, the work flexibility of the weeder members (16, 23) is to be underlined: the bars 15, 21 may be rotated about their axis by setting a different entry position of the hook-like members 17 into the ground; it is sufficient to loosen the fixing means 14, 20, rotate the bars 15, 21 and tighten said fixing means 14, 20 again.

## Claims

1. Rotating weeder member (16, 23) for weeder machine (1), comprising a plurality of hook-like elements (17) rigidly supported by one of their extremity by a connecting means (18) rotatably mounted to support means (15, 21) of the weeder machine (1), radially equally spaced in respect of the axis of rotation (A) of the member (16, 23) to form a rotoidal discontinual open structure for the passage of the lifted soil, having an open internal cavity (190) and a sequence of outward convex portions (172) of said elements (17) suitable to interact in sequence with the soil to work,
**characterized in that** each hook-like element (17) is constituted by a first rectilinear diverging section towards the outside in respect of the axis of rotation (A) of the member (16, 23) and rigidly connected to the connecting element (18), a curvilinear section (172) with outward convexity suitable to interact with the soil, and a second rectilinear section (173) converging towards the inside in respect of the rotation axis (A) of the member (16, 23).

2. Weeder machine (1), comprising a bearing frame (2, 3) which supports moving means (4, 4a, 4b, 5) and rotating weeder members (16, 23), **characterized in that** it provides rotating weeder members (16, 23) according to claim 1.

3. Weeder machine (1) according to claim 2, **characterized in that** said rotating weeder members (16, 23) are idle.

4. Weeder machine (1) according to claims 2 or 3, **characterized in that** said rotating weeder members (16, 23) have an axis of rotation (A) inclined with respect to supporting vertical bars (15, 21).

5. Weeder machine (1) according to claim 4, **characterized in that** it provides a couple of weeder members (16, 23) inclined of the same angle (α) with respect to vertical support bars (15, 21) but in the opposite sense in such a way to result convergent.

6. Weeder machine (1) according to any of claims 2-5, **characterized in that** said vertical bars (15, 21) are rotatable around their own vertical axis in such a way to vary the entry position of the hook-like elements (17) in the soil.

## Patentansprüche

1. Rotierendes Unkrautjätelement (16, 23) für eine Unkrautjätmaschine (1),
das eine Mehrzahl von durch eines ihrer Enden durch ein an ein Tragmittel (15, 21) der Unkrautjätmaschine (1) drehbar montiertes Verbindungsmittel (18) starr gelagerten hakenartigen Elementen (17) aufweist, die bezüglich der Rotationsachse (A) des Elements (16, 23) radial gleich beabstandet sind, um eine rotationsförmige unterbrochene offene Struktur für den Durchgang der angehobenen Erde zu bilden,
das einen offenen inneren Hohlraum (190) und eine Folge von auswärtigen konvexen Abschnitten (172) der Elemente (17) hat, die geeignet sind, nacheinander mit der zu bearbeitenden Erde zusammenzuwirken,
**dadurch gekennzeichnet, dass** jedes hakenartige Element (17) durch einen ersten geradlinigen, bezüglich der Rotationsachse (A) des Elements (16, 23) zu der Außenseite hin auseinanderstrebenden und starr mit dem Verbindungselement (18) verbundenen Abschnitt, einen kurvenförmigen Abschnitt (172) mit einer auswärtigen Konvexität, die geeignet ist, mit der Erde zusammenzuwirken, und einen zweiten geradlinigen Abschnitt (173), der bezüglich der Rotationsachse (A) des Elements (16, 23) zu der Innenseite hin zusammenläuft, gebildet ist.

2. Unkrautjätmaschine (1), die einen Tragrahmen (2, 3), aufweist, der sich bewegende Mittel (4, 4a, 4b, 5) und rotierende Unkrautjätelemente (16, 23) trägt, **dadurch gekennzeichnet, dass** sie mit rotierenden Unkrautjätelementen (16, 23) gemäß Anspruch 1 versehen ist.

3. Unkrautjätmaschine (1) gemäß Anspruch 2, **dadurch gekennzeichnet, dass** die rotierenden Unkrautjätelemente (16, 23) freilaufend sind.

4. Unkrautjätmaschine (1) gemäß Anspruch 2 oder 3, **dadurch gekennzeichnet, dass** die rotierenden Unkrautjätelemente (16, 23) eine Rotationsachse (A) haben, die bezüglich tragender vertikaler Stangen (15, 21) geneigt sind.

5. Unkrautjätmaschine (1) gemäß Anspruch 4, **dadurch gekennzeichnet, dass** sie einige Unkrautjätelemente (16, 23) bereitstellt, die bezüglich der vertikalen Tragstangen (15, 21) in demselben Winkel (α), aber in dem entgegengesetzten Sinn in einer solchen Weise geneigt sind, das sie sich so ergeben, dass sie zusammenlaufen.

6. Unkrautjätmaschine (1) gemäß einem der Ansprüche 2 - 5, **dadurch gekennzeichnet, dass** die vertikalen Stangen (15, 21) in einer solchen Weise um ihre eigene vertikale Achse herum drehbar sind, dass sie die Eintrittsposition der hakenartigen Elemente (17) in die Erde verändern.

## Revendications

1. Élément d'extirpateur rotatif (16, 23) pour extirpateur (1), comprenant une pluralité d'éléments en forme de crochet (17) supportés de manière rigide par l'une de leur extrémité par un moyen de liaison (18) monté en rotation sur des moyens de support (15, 21) de l'extirpateur (1), espacés de manière radialement égale par rapport à l'axe de rotation (A) de l'élément (16, 23) pour former une structure ouverte discontinue rotoïde pour le passage de la terre soulevée, ayant une cavité interne ouverte (190) et une séquence de parties convexes vers l'extérieur (172) desdits éléments (17) aptes à interagir en séquence dans le sol à travailler,
**caractérisé en ce que** chaque élément en forme de crochet (17) est constitué par une première section divergente rectiligne vers l'extérieur par rapport à l'axe de rotation (A) de l'élément (16, 23) et relié de manière rigide à l'élément de liaison (18), une section curviligne (172) avec convexité vers l'extérieur apte à interagir avec le sol, et une deuxième section rectiligne (173) convergeant vers l'intérieur par rapport à l'axe de rotation (A) de l'élément (16, 23).

2. Extirpateur (1), comprenant un châssis porteur (2, 3) qui supporte des moyens de déplacement (4, 4a, 4b, 5) et des éléments d'extirpateur rotatifs (16, 23), **caractérisé en ce qu'**il fournit des éléments d'extirpateur rotatifs (16, 23) selon la revendication 1.

3. Extirpateur (1) selon la revendication 2, **caractérisé en ce que** lesdits éléments d'extirpateur rotatifs (16, 23) sont au repos.

4. Extirpateur (1) selon la revendication 2 ou 3, **caractérisé en ce que** lesdits éléments d'extirpateur rotatifs (16, 23) ont un axe de rotation (A) incliné par rapport à des barres verticales de support (15, 21).

5. Extirpateur (1) selon la revendication 4, **caractérisé en ce qu'**il fournit un couple d'éléments d'extirpateur (16, 23) inclinés du même angle (α) par rapport aux barres de support verticales (15, 21) mais dans le sens opposé de manière à être convergents.

6. Extirpateur (1) selon l'une des revendications 2 à 5, **caractérisé en ce que** lesdites barres verticales (15, 21) peuvent tourner autour de leur propre axe vertical de manière à faire varier la position d'entrée des éléments en forme de crochet (17) dans le sol.
